(19) Europäisches Patentamt
European Patent Office
Office européen des brevets

(11) **EP 4 404 501 B1**

(12) **FASCICULE DE BREVET EUROPEEN**

(45) Date de publication et mention
de la délivrance du brevet:
**27.05.2026 Bulletin 2026/22**

(21) Numéro de dépôt: **24150924.9**

(22) Date de dépôt: **09.01.2024**

(51) Classification Internationale des Brevets (IPC):
*H04L 9/00* *(2022.01)*

(52) Classification Coopérative des Brevets (CPC):
**H04L 9/003;** H04L 2209/043

(54) **PROTECTION CONTRE LES ATTAQUES PAR CANAL AUXILIAIRE D'UN ALGORITHME CRYPTOGRAPHIQUE IMPLIQUANT UNE TABLE DE SUBSTITUTION**

SCHUTZ GEGEN SEITENKANALANGRIFFE EINES KRYPTOGRAFISCHEN ALGORITHMUS MIT EINEM SUBSTITUTIONSTISCH

PROTECTION AGAINST SIDE-CHANNEL ATTACKS OF A CRYPTOGRAPHIC ALGORITHM INVOLVING A SUBSTITUTION TABLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.01.2023 FR 2300615**

(43) Date de publication de la demande:
**24.07.2024 Bulletin 2024/30**

(73) Titulaire: **Commissariat à l'Energie Atomique et aux Energies Alternatives**
**75015 Paris (FR)**

(72) Inventeur: **BELLEVILLE, Nicolas**
**38054 GRENOBLE CEDEX 09 (FR)**

(74) Mandataire: **Santarelli**
**Tour Trinity**
**1 bis Place de la Défense**
**92400 Courbevoie (FR)**

(56) Documents cités:
**EP-B1- 2 296 307**

- **GUILLAUME FUMAROLI ET AL: "Affine Masking against Higher-Order Side Channel Analysis", IACR, INTERNATIONAL ASSOCIATION FOR CRYPTOLOGIC RESEARCH, vol. 20101012:131709, 11 October 2010 (2010-10-11), pages 1 - 25, XP061004272**
- **TUNSTALL MICHAEL ET AL: "Masking Tables-An Underestimated Security Risk", 8 July 2014, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 425 - 444, XP047608349**

## Description

### Domaine technique

La présente invention appartient au domaine de la cryptographie. Plus particulièrement, l'invention concerne un procédé pour protéger un algorithme cryptographique contre des attaques par canal auxiliaire lorsque l'algorithme utilise une table de substitution. L'invention a également pour objet un dispositif électronique implémentant un tel procédé.

### Etat de la technique antérieure

Il existe aujourd'hui de nombreux dispositifs électroniques comportant un processeur configuré pour exécuter un algorithme cryptographique. Un tel dispositif électronique correspond par exemple à une carte à puce, un circuit intégré de type microcontrôleur, ou un appareil électronique comportant un composant cryptographique (ordinateur, téléphone portable, carte de paiement, dispositif de création de signature électronique, etc.).

Les algorithmes cryptographiques considérés dans la présente demande utilisent une clé secrète pour calculer une information de sortie à partir d'une information d'entrée. Il peut s'agir par exemple d'une procédure de chiffrement, de déchiffrement, d'authentification, de signature ou de vérification de signature.

Le chiffrement AES (acronyme anglais de « Advanced Encryption Standard », en français « norme de chiffrement avancé ») est un exemple d'algorithme cryptographique symétrique. Il est aujourd'hui considéré comme relativement sûr et utilisé dans de nombreuses applications (par exemple dans le chiffrement de certaines applications de communication ou dans le chiffrement du contenu d'un disque dur).

Les algorithmes cryptographiques sont construits de tel sorte qu'il n'est en pratique pas possible de découvrir la clé secrète uniquement à partir de l'information d'entrée et de l'information de sortie.

Les opérations exécutées par le processeur du dispositif électronique pour mettre en œuvre l'algorithme cryptographique engendrent des variations de certaines grandeurs physiques telles que la consommation électrique, le rayonnement électromagnétique, la température, l'intensité acoustique ou la durée d'exécution. Ces variations sont dépendantes des données utilisées dans les différentes opérations. Plus particulièrement, dans la mesure où certaines opérations de l'algorithme impliquent la clé secrète, les variations observées peuvent présenter une corrélation avec la valeur de la clé secrète. Une personne malintentionnée peut alors effectuer des mesures d'une ou plusieurs grandeurs physiques, puis exploiter ces mesures par analyse statistique afin d'obtenir des informations sur la clé secrète utilisée par l'algorithme.

Ce type d'attaque est connu sous le nom d' « attaque par canal auxiliaire » (SCA pour l'acronyme anglais « Side-Channel Attack »). Plusieurs types d'attaques par canal auxiliaire sont connus, par exemple les attaques de type DPA (acronyme anglais pour « Differential Power Analysis »), « attaque par modèle » (« Template Attack » en anglais), ou CPA (pour l'acronyme anglais « Correlation Power Analysis », en français « analyse de la puissance de corrélation »).

On définit généralement l'ordre d'une attaque par canal auxiliaire en fonction du nombre de variables que l'attaquant cherche à déterminer à partir des mesures observées. Par exemple, pour une attaque du premier ordre, l'attaquant s'intéresse uniquement à la valeur d'une variable à un instant donné. Pour une attaque du second ordre, l'attaquant s'intéresse à la valeur de deux variables différentes à deux instants donnés potentiellement différents. Il est généralement admis que la difficulté de mettre en œuvre une attaque par canal auxiliaire augmente de façon exponentielle avec l'ordre de l'attaque.

Il est connu de protéger un dispositif électronique contre les attaques par canal auxiliaire en masquant les variables secrètes utilisées par l'algorithme cryptographique et en modifiant les opérations effectuées sur ces variables secrètes (ou sur des variables intermédiaires calculées à partir des variables secrètes) pour que les opérations portent sur des représentations masquées de ces variables et non plus directement sur les variables elles-mêmes. Il convient pour cela de modifier les opérations de l'algorithme pour les adapter à la technique de masquage utilisée.

Il existe différentes techniques de masquage. Le principe général du masquage est de faire la séparation d'une variable secrète en plusieurs parties (« shares » en anglais). Les opérations de l'algorithme sont alors effectuées sur les différentes parties de la variable secrète et non plus directement sur la variable secrète elle-même. Il est ensuite possible, grâce à la connaissance des valeurs des parties en lesquelles la variable secrète a été initialement séparée, de déterminer une valeur de sortie de l'algorithme à partir d'un résultat final des opérations de l'algorithme effectuées sur lesdites parties. Les différentes techniques de masquage partagent ce principe, mais utilisent différentes sortes de décomposition d'une variable secrète.

Il est connu par exemple d'utiliser un masquage booléen, un masquage multiplicatif ou un masquage affine (le masquage affine est une combinaison du masquage booléen et du masquage multiplicatif). Ces différentes techniques de masquages ne sont cependant pas directement compatibles avec l'utilisation d'une table de substitution (ou S-Box pour « Substitution Box » en anglais) associée à une fonction non-linéaire, comme c'est par exemple le cas dans l'algorithme AES.

Le document « Affine Masking against Higher-Order Side Channel Analysis », G. Fumaroli et al., décrit une application du masquage affine à la S-Box de l'AES. La S-Box est gérée au moyen d'une table de substitution S-Box' précalculée de telle sorte que $Sub'(m.x + b) = m.Sub(x) + b'$, où $Sub$ est la fonction associée à la S-Box de l'AES, $Sub'$ est la fonction associée à la table de substitution S-Box', et $m$, $b$ et $b'$ sont des variables de masquage déterminées aléatoirement. La table S-Box' doit alors être recalculée à chaque fois que les variables de masquage sont changées, ce qui peut impacter significativement les performances de l'algorithme. Les opérations « . » et « + » correspondent ici respectivement à la multiplication et l'addition de corps fini.

Le document « Formal Analysis of the Entropy / Security Trade-Off in First-Order Masking Countermeasures against Side-Channel Attacks », M. Nassar et al., décrit une application du masquage booléen à la S-Box de l'AES. Il est proposé de restreindre l'ensemble des valeurs pouvant être prise par la variable de masquage et de précalculer une table de substitution S-Box' pour chacune de ces valeurs. Cette solution n'est cependant pas bien adaptée au masquage affine car le masquage affine implique d'utiliser deux variables de masquage, et cela entraîne un grand nombre de valeurs possibles pour le couple formé par les deux variables. Or, le masquage affine présente une meilleure résistance aux attaques par canal auxiliaire.

Le document « Secure Multiplicative Masking of Power Functions », L. Genelle et al., décrit une méthode pour évaluer la S-Box de l'AES de manière masquée. La S-Box est décomposée en une fonction puissance et une fonction affine. Les auteurs présentent comment évaluer la S-Box en effectuant la fonction puissance avec un masquage multiplicatif, et en effectuant tout le reste de l'AES (fonction affine incluse) en masquage booléen. Cette méthode nécessite cependant des conversions du masquage multiplicatif vers le masquage booléen et inversement, ce qui nuit aux performances de l'algorithme. D'autre part, contrairement au masquage affine, le masquage booléen et multiplicatif sont ici utilisés séparément et non de manière combinée.

EP2296307B1 divulgue également la protection d'un procédé de traitement cryptographique de données tel que l'AES contre les attaques par analyse par canal auxiliaire.

Il convient donc de trouver de nouvelles solutions de protection contre les attaques par canal auxiliaire afin d'obtenir un compromis intéressant entre performance et sécurité.

**Exposé de l'invention**

La présente invention a pour objectif de remédier à tout ou partie des inconvénients de l'art antérieur.

A cet effet, et selon un premier aspect, il est proposé par la présente invention un procédé pour protéger un dispositif électronique contre une attaque par canal auxiliaire. Le dispositif électronique comporte un processeur configuré pour exécuter un algorithme cryptographique manipulant des variables appartenant à un corps fini E et impliquant au moins une fonction de substitution $Sub$ non-linéaire appliquée à une variable secrète s à protéger. La fonction $Sub$ comporte une fonction d'élévation à une puissance $k$ et une fonction affine $Aff$ telles que $Sub(s) = Aff(s^k) = Lin(s^k) + c$, où c est une constante et $Lin$ est une fonction linéaire par rapport à une opération d'addition du corps fini E. Le procédé est mis en œuvre par le processeur du dispositif électronique. Le procédé comporte :

- un masquage de la variable secrète s par une fonction de masquage $M$ telle que $M(s) = m.s + b$, chacune des variables $m$ et $b$ étant choisie aléatoirement parmi les éléments de $E$ ou parmi un sous-ensemble $de E$, la variable $m$ étant choisie non nulle ;
- une application à $M(s)$, en fonction de b, d'une première table de substitution $T_{pow}$ correspondant à la fonction d'élévation à la puissance $k$ et dont les éléments ont été préalablement calculés pour les différentes valeurs pouvant être prises par $M(s)$ et $b$, le calcul d'un élément de $T_{pow}$ comportant un calcul de $(M(s) - b)^k + b'$, où $b'$ est une variable déterminée en fonction de $M(s)$ et/ou $b$ ;
- une application au résultat $r_1$ obtenu en sortie de la première table de substitution $T_{pow}$, en fonction de m, d'une deuxième table de substitution $T_{aff}$ correspondant à la fonction affine $Aff$ et dont les éléments ont été préalablement calculés pour les différentes valeurs pouvant être prises par $r_1$ et $m$, le calcul d'un élément de $T_{aff}$ comportant un calcul de $m.Aff(m^{-k}.r_1)$.

Par l'expression « la première table de substitution $T_{pow}$ correspond à la fonction d'élévation à la puissance $k$ » on entend que la fonction associée à la table de substitution $T_{pow}$ comprend une étape d'élévation à la puissance $k$ (autrement dit la fonction associée à $T_{pow}$ n'est pas nécessairement limitée à une élévation à la puissance $k$). De même, par l'expression « la deuxième table de substitution $T_{aff}$ correspond à la fonction affine $Aff$ » on entend que la fonction associée à la table de substitution $T_{aff}$ comprend une étape d'application de la fonction affine $Aff$ (autrement dit la fonction associée à $T_{pow}$ n'est pas nécessairement limitée à la fonction affine $Aff$).

Il convient de noter que la fonction $Aff$ n'est pas nécessairement affine sur le corps fini $E$ ; en revanche la fonction $Lin$ est linéaire par rapport à une opération d'addition du corps fini $E$. En particulier, dans le cas de l'AES, la fonction $Aff$ est affine sur $GF(2)$ et $Lin$ est linéaire par rapport au « ou exclusif » dans $E = GF(2^8)$.

Le masquage affine permet de sécuriser l'utilisation de la variable secrète s. L'utilisation des deux tables $T_{pow}$ et $T_{aff}$ permet de faciliter la prise en compte du masquage lors de l'application de la fonction de substitution *Sub à* la variable secrète *s* ; en effet, les deux tables $T_{pow}$ et $T_{aff}$ sont précalculées et utilisées de telle sorte qu'on obtienne en sortie de $T_{aff}$ un résultat qui correspond à une représentation masquée (avec un masquage affine présentant le même masque multiplicatif *m*) du résultat qui aurait été obtenu si on avait appliqué la fonction *Sub* à la variable secrète *s*. L'utilisation des deux tables $T_{pow}$ et $T_{aff}$ est particulièrement robuste contre les attaques par canal auxiliaire car seul un sous-ensemble strict des parties (« shares ») obtenues par le masquage est utilisé pour évaluer chacune des tables. L'utilisation des deux tables $T_{pow}$ et $T_{aff}$ permet en outre de limiter l'impact du masquage sur l'empreinte mémoire.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, le procédé comporte :

- une application aux variables *m* et *b* 'd'une troisième table de substitution $T_{cor}$ dont les éléments ont été préalablement calculés pour les différentes valeurs pouvant être prises par m et *b'*, le calcul d'un élément de $T_{cor}$ comportant un calcul de *m.Lin(m$^{-k}$.b')* - *b''*, où *b''* est une variable déterminée en fonction de *m* et/ou *b'*;
- une soustraction au résultat $r_2$ obtenu en sortie de la deuxième table de substitution $T_{aff}$ du résultat $r_3$ obtenu en sortie de la troisième table de substitution $T_{cor}$ pour obtenir un résultat $r_4$ sous la forme $r_4 = r_2 - r_3 = m.Sub(s) + b''$.

De telles dispositions permettent de ramener le masque booléen de la représentation masquée obtenue en sortie de la table $T_{aff}$ dans un ensemble spécifique. Cela simplifie l'exploitation de la représentation maquée obtenue en sortie de $T_{aff}$.

L'invention peut également s'appliquer à une combinaison d'un masquage affine avec un masquage carré, ou à une combinaison d'un masquage booléen avec un masquage carré. Ainsi, la présente invention porte également sur un procédé pour protéger un dispositif électronique contre une attaque par canal auxiliaire. Le dispositif électronique comporte un processeur configuré pour exécuter un algorithme cryptographique manipulant des variables appartenant à un corps fini binaire *E* et impliquant au moins une fonction de substitution *Sub* non-linéaire appliquée à une variable secrète s à protéger. La fonction *Sub* comporte une fonction d'élévation à une puissance *k* et une fonction affine *Aff* telles que $Sub(s) = Aff(s^k) = Lin(s^k) + c$, où *c* est une constante et *Lin* est une fonction linéaire par rapport à une opération d'addition du corps fini binaire *E.* Le procédé est mis en œuvre par le processeur du dispositif électronique. Le procédé comporte :

- un masquage de la variable secrète *s* par une fonction de masquage *M* telle que $M(s) = m.s^{2p} + b$ , chacune des variables *m, b* et *p* étant choisie aléatoirement parmi les éléments de *E* ou parmi un sous-ensemble de *E,* chacune des variables m et p étant choisie non nulle ;
- une application à *M(s),* en fonction de *b,* d'une première table de substitution $T_{pow}$ correspondant à la fonction d'élévation à la puissance k et dont les éléments ont été préalablement calculés pour les différentes valeurs pouvant être prises par *M(s)* et *b,* le calcul d'un élément de $T_{pow}$ comportant un calcul de $(M(s) - b)^k + b'$, où *b'* est une variable déterminée en fonction de *M(s)* et/ou b ;
- une application au résultat $r_1$ obtenu en sortie de la première table de substitution $T_{pow}$, en fonction de *m* et *p,* d'une deuxième table de substitution $T_{aff}$ correspondant à la fonction affine *Aff* et dont les éléments ont été préalablement calculés pour les différentes valeurs pouvant être prises par $r_1$, m *et p,* le calcul d'un élément de $T_{aff}$ comportant un calcul de
$$m.Aff\big((m^{-k}.r_1)^{2^{-p}}\big)^{2^p}.$$

Dans des modes particuliers de mise en œuvre, le procédé comporte :

- une application aux variables *m, p* et b' d'une troisième table de substitution $T_{cor}$ dont les éléments ont été préalablement calculés pour les différentes valeurs pouvant être prises par *m, p* et *b',* le calcul d'un élément de $T_{cor}$ comportant un calcul de $m.lin\big(m^{-k.2^{-p}}.b'^{2^{-p}}\big)^{2^p} - b''$, où *b''* est une variable déterminée en fonction d'un ou plusieurs éléments parmi m, *b'* et *p*;
- une soustraction au résultat $r_2$ obtenu en sortie de la deuxième table de substitution $T_{aff}$ du résultat $r_3$ obtenu en sortie de la troisième table de substitution $T_{cor}$ pour obtenir un résultat $r_4$ sous la forme $r_4 = r_2 - r_3 = m.Sub(s)^{2p} + b''$.

Dans des modes particuliers de mise en œuvre, la variable *b* est choisie dans un sous-ensemble $E_b$ strict *de E,* chacune des valeurs pouvant être prise par la variable *b* est associée à un index, et l'application de la première table de substitution $T_{pow}$ est effectuée en fonction de l'index associé à la variable *b*.

Dans des modes particuliers de mise en œuvre, la variable m est choisie dans un sous-ensemble $E_m$ strict de $E$, chacune des valeurs pouvant être prise par la variable m est associée à un index, et l'application de la deuxième table de substitution $T_{aff}$ est effectuée en fonction de l'index associé à la variable $m$.

Dans des modes particuliers de mise en œuvre, la variable $p$ est choisie dans un plus petit ensemble $E_p$ d'entiers naturels défini tel que, pour tout entier naturel $k'$ n'appartenant pas à $E_p$, il existe une valeur $k$ appartenant à $E_p$ telle que, pour toute variable $x$ appartenant à $E$, $x^{2k'}$ est égal à $x^{2k}$.

Par exemple si on considère le corps fini binaire $E = GF(256)$, l'ensemble $E_p$ peut correspondre à l'ensemble {0, 1, 2, ..., 7}. Seules les valeurs appartenant à $E_p$ sont prises en compte pour construire la table de substitution $T_{aff}$. L'ensemble $E_p$ pourrait aussi correspondre à {1, 2, 3, ..., 8}, ou à {2, 3, 4, ..., 9}, etc.

La variable $p$ peut aussi avantageusement être choisie dans un sous-ensemble strict de l'ensemble $E_p$ (pour limiter encore davantage le nombre de valeurs possibles pouvant être prise par $p$, et ainsi limiter la taille de la table $T_{aff}$).

Dans des modes particuliers de mise en œuvre, chacune des valeurs pouvant être prise par la variable p est associée à un index, et l'application de la deuxième table de substitution $T_{aff}$ est effectuée en fonction de l'index associé à la variable $p$.

Le fait d'utiliser un index associé au masque booléen, au masque affine ou au masque multiplicatif (plutôt que d'utiliser directement la valeur du masque) permet de renforcer la sécurité contre une attaque par canal auxiliaire et de limiter l'impact du masquage sur l'empreinte mémoire.

Dans des modes particuliers de mise en œuvre, le sous-ensemble $E_m$ et le sous-ensemble $E_b$ sont différents et choisis de manière à obtenir un poids de Hamming constant pour toutes les valeurs pouvant être prises par une concaténation de $M(s)$ avec l'index correspondant à $m$ ou $b$.

De telles dispositions permettent de limiter les fuites en transition. On appelle fuite en transition une fuite résultant de l'utilisation d'une même ressource matérielle par deux variables l'une après l'autre ; la fuite dépend alors simultanément des valeurs des deux variables. On modélise typiquement une fuite en transition par une distance de Hamming entre les deux variables.

Dans des modes particuliers de mise en œuvre, l'algorithme cryptographique est l'algorithme « Advanced Encryption Standard », aussi connu sous l'acronyme AES.

Selon un deuxième aspect, la présente invention concerne un produit programme d'ordinateur pour l'exécution d'un algorithme cryptographique. Le programme comprend des instructions de code qui, lorsqu'elles sont exécutées par un processeur d'un dispositif électronique, configurent ledit processeur pour exécuter un procédé selon l'un quelconque des modes de mise en œuvre précédents.

Selon un troisième aspect, la présente invention concerne un dispositif électronique comprenant une mémoire mémorisant un tel produit programme d'ordinateur, et un processeur configuré pour l'exécuter.

## Brève description des dessins

D'autres caractéristiques et avantages de l'invention apparaîtront à la lecture d'un mode de réalisation préférentiel de l'invention, décrit en référence aux figures jointes parmi lesquelles :

Fig.1] représente de manière schématique un dispositif électronique configuré pour exécuter un algorithme cryptographique.

[Fig 2] illustre de manière schématique la mise en œuvre d'une fonction $Sub$ non-linéaire appliquée à une variable secrète s à protéger.

[Fig.3] illustre de manière schématique un masquage de la variable secrète s par masquage affine et l'application d'une fonction $Sub'$ à la variable masquée pour obtenir en sortie une représentation masquée du résultat de l'application de la fonction $Sub$ à la variable secrète $s$.

[Fig 4] représente de manière schématique les principales étapes d'un procédé selon l'invention pour protéger un algorithme cryptographique contre des attaques par canal auxiliaire, dans le cas d'un masquage affine.

[Fig 5] représente de manière schématique les principales étapes d'un procédé selon l'invention pour protéger un algorithme cryptographique contre des attaques par canal auxiliaire.

[Fig 6] illustre de manière schématique un masquage de la variable secrète s par une combinaison d'un masquage affine et d'un masquage carré, et l'application d'une fonction $Sub'$ à la variable masquée pour obtenir en sortie une représentation masquée du résultat de l'application de la fonction $Sub$ à la variable secrète s.

[Fig 7] représente de manière schématique les principales étapes d'un procédé selon l'invention pour protéger un algorithme cryptographique contre des attaques par canal auxiliaire, dans le cas d'un masquage affine combiné à un masquage carré.

**Exposé détaillé de modes de réalisation particuliers**

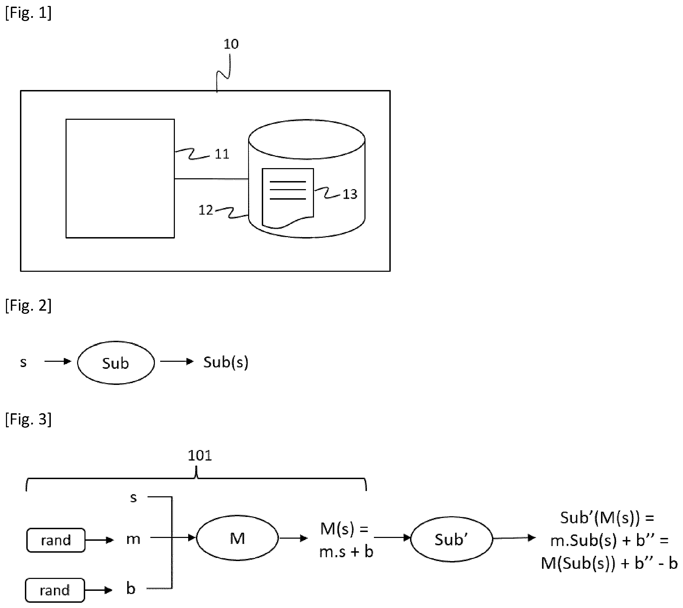

La figure 1 décrit de manière schématique un dispositif électronique 10 comportant un processeur 11 configuré pour exécuter un algorithme cryptographique. Le processeur 11 est configuré par des instructions de code 13 sauvegardées dans une mémoire 12 du dispositif électronique 10. Les instructions de code 13 forment un programme d'ordinateur (ou programme informatique) qui met en œuvre l'algorithme cryptographique.

Le dispositif électronique 10 correspond par exemple à une carte à puce, un composant cryptographique (par exemple un circuit intégré de type microcontrôleur), ou un appareil électronique comportant un composant cryptographique (ordinateur, téléphone portable, carte de paiement, dispositif de création de signature électronique, etc.).

L'algorithme cryptographique manipule des variables appartenant à un corps fini $E$. Il peut s'agir d'un corps fini binaire, et dans ce cas l'opération d'addition du corps fini binaire $E$ correspond au « OU exclusif » (XOR). Il peut toutefois également s'agir d'un corps fini non binaire, et dans ce cas l'opération d'addition du corps fini $E$ correspond à une addition modulaire.

On se place dans le cas où l'algorithme cryptographique implique au moins une fonction de substitution $Sub$ non-linéaire appliquée à une variable secrète s qu'il convient de protéger. La figure 2 illustre schématiquement l'application de la fonction $Sub$ non-linéaire à une variable secrète s à protéger. On se place en outre dans le cas où la fonction $Sub$ comporte une fonction d'élévation à une puissance $k$ et une fonction affine $Aff$ telles que $Sub(s) = Aff(s^k) = Lin(s^k) + c$, où $c$ est une constante et $Lin$ est une fonction linéaire par rapport à l'opération d'addition de $E$.

A titre d'exemple nullement limitatif, l'algorithme cryptographique considéré peut correspondre à tout ou partie d'un algorithme cryptographique symétrique tel qu'AES. La fonction $Sub$ peut en effet correspondre à la fonction associée à la table de substitution (S-Box) de l'algorithme AES. La S-Box de l'AES est en effet composée d'une inversion et d'une fonction affine dans le corps fini binaire $GF(2^8)$.

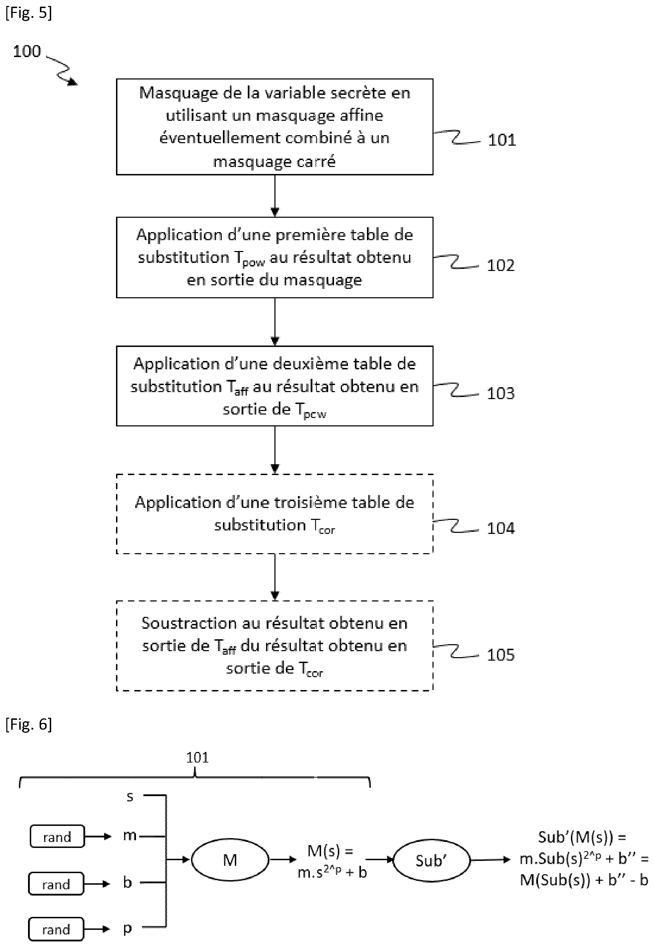

La figure 5 représente de manière schématique les principales étapes d'un procédé 100 pour protéger un tel algorithme cryptographique contre des attaques par canal auxiliaire.

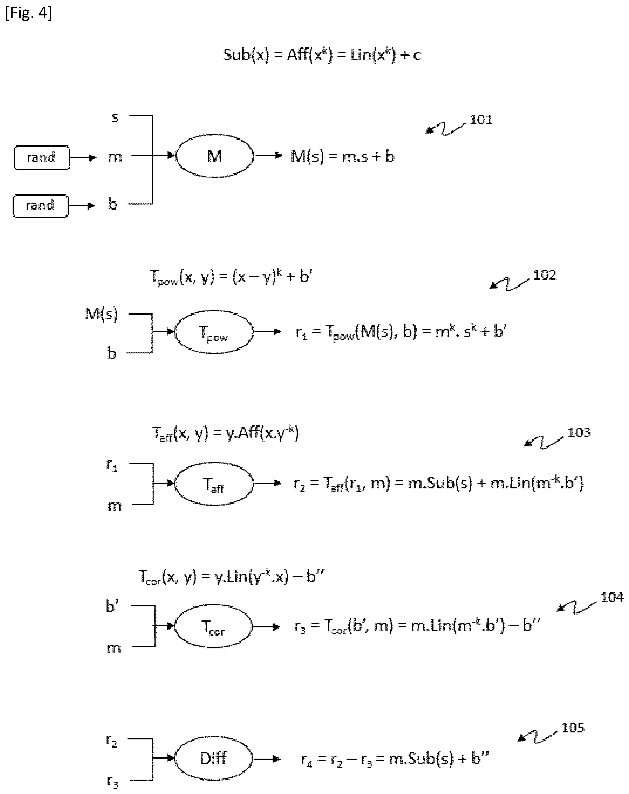

Tel qu'illustré sur la figure 5, le procédé 100 comporte un masquage 101 de la variable secrète s par une fonction de masquage. Dans des modes particuliers de mise en œuvre, il peut s'agir d'un masquage affine. Les figures 3 et 4 décrivent les étapes du procédé 100 dans le cas où l'on considère un masquage affine.

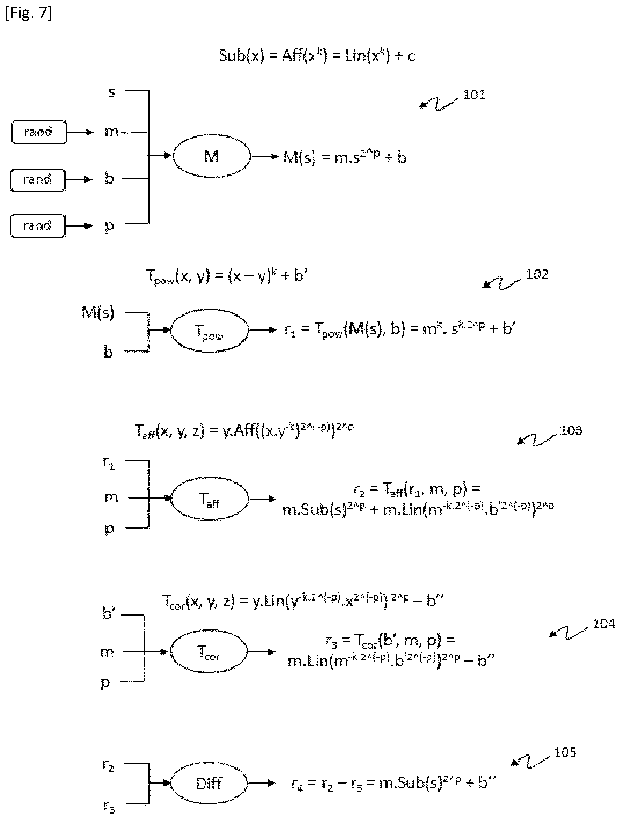

Dans des modes particuliers de mise en œuvre, il peut également s'agir d'une combinaison d'un masquage affine avec un masquage carré, ou d'une combinaison d'un masquage booléen avec un masquage carré. Le cas du masquage affine combiné à un masquage carré sera décrit ultérieurement en référence aux figures 6 et 7.

Mise en œuvre avec un masquage affine :

Les figures 3 et 4 illustrent le cas où un masquage affine est utilisé. Tel qu'illustré sur ces figures, l'étape de masquage 101 de la variable secrète $s$ comporte un tirage aléatoire (« rand ») d'une valeur pour une variable $m$ correspondant à un masque multiplicatif, et un tirage aléatoire d'une valeur pour une variable $b$ correspondant à un masque booléen (ou un masque « arithmétique » si on place dans un corps fini non binaire). La fonction de masquage peut alors s'écrire sous la forme $M(s) = m.s + b$. Chacune des variables $m$ et $b$ est choisie aléatoirement parmi les éléments de $E$ ou parmi un sous-ensemble de $E$. La variable $m$ est choisie pour être non nulle. $M(s)$, $m$ et $b$ correspondent alors aux trois parties (« shares ») du masquage de la variable secrète s.

Tel qu'illustré sur la figure 3, pour prendre en compte le masquage 101, il serait envisageable de déterminer une table de substitution S-Box' dont la fonction de substitution associée $Sub'$ est telle que $Sub'(m.s + b) = m.Sub(s) + b''$. Autrement dit, cette solution reviendrait à déterminer une table de substitution S-Box' telle que la sortie de la table de substitution S-Box' soit une représentation masquée (avec un masquage affine présentant le même masque multiplicatif $m$) du résultat qui aurait été obtenu appliquant la table de substitution S-Box à la variable secrète $s$. Toutefois, cette solution nécessiterait de recalculer la table S-Box' à chaque fois que les variables de masquage m et b sont changées, ce qui impacterait significativement les performances de l'algorithme. Il serait également envisageable de précalculer toutes les valeurs possibles pour la table S-Box' en fonction de toutes les valeurs pouvant être prises par le couple de variables ($m$, $b$), mais cela impacterait significativement la taille de la mémoire requise.

L'invention repose avantageusement sur une décomposition de la table S-Box' en au moins deux tables de substitution, en exploitant d'une part les propriétés du masquage multiplicatif vis-à-vis de la fonction d'élévation à la puissance $k$, et d'autre part les propriétés du masquage booléen vis-à-vis de la fonction affine $Aff$.

Ainsi, et tel qu'illustré sur les figures 4 et 5, le procédé 100 comporte une application 102 d'une première table de substitution $T_{pow}$ à la représentation masquée $M(s)$ de la variable secrète. Cette première table de substitution $T_{pow}$ correspond à l'étape d'élévation à la puissance $k$ de la fonction non-linéaire $Sub$. En effet, la fonction de substitution associée à $T_{pow}$ comporte un calcul d'une élévation à la puissance $k$ appliqué à $M(s)$.

Avantageusement, tous les éléments de la table $T_{pow}$ sont préalablement calculés pour les différentes valeurs pouvant être prises par $M(s)$ et $b$.

Dans l'exemple illustré sur la figure 4, la table de substitution $T_{pow}$ prend en entrée $M(s)$ et b et fournit en sortie le résultat $r_1 = (M(s) - b)^k + b'$, où b' est une variable déterminée en fonction de $M(s)$ et/ou $b$. La variable $b'$ présente une distribution indépendante de la variable secrète $s$. Il est possible par exemple de prendre $b' = b$. Toutefois, il est avantageux de choisir une valeur pour $b'$ différente de la valeur de $b$ car cela permet de réduire l'impact d'une fuite en transition entre l'entrée et la sortie de cette table. La variable $b'$ peut éventuellement être choisie dans un ensemble différent de l'ensemble utilisé pour choisir la variable $b$. De préférence, la variable $b'$ est choisie pour prendre des valeurs non nulles au moins pour certaines valeurs de $M(s)$ et $b$.

Il est important de noter que la table $T_{pow}$ est évaluée en fonction de $M(s)$ et $b$ mais sans utiliser la variable $m$.

Le résultat $r_1$ en sortie de la table $T_{pow}$ peut alors s'écrire sous la forme :

$$r_1 = (M(s) - b)^k + b' = m^k . s^k + b'$$

Tel qu'illustré sur les figures 4 et 5, le procédé 100 comporte une application 103 d'une deuxième table de substitution $T_{aff}$ au résultat $r_1$ obtenu en sortie de la première table de substitution $T_{pow}$. Cette deuxième table de substitution $T_{aff}$ correspond à l'étape affine $Aff$ de la fonction non-linéaire $Sub$. En effet, la fonction de substitution associée à $T_{aff}$ comporte un calcul de la fonction affine $Aff$ appliqué (indirectement) à $r_1$. Par exemple, et tel qu'illustré sur la figure 4, la fonction affine $Aff$ est appliqué à $(m^{-k} . r_1)$.

Avantageusement, tous les éléments de la table $T_{aff}$ sont préalablement calculés pour les différentes valeurs pouvant être prises par $r_1$ et $m$.

Il est important de noter que la table $T_{aff}$ est évaluée en fonction de $r_1$ et m mais sans utiliser la variable b.

Tel qu'illustré sur la figure 4, la table de substitution $T_{aff}$ prend en entrée $r_1$ et m et fournit en sortie le résultat $r_2 = m.Aff(m^{-k} . r_1)$. Le résultat $r_2$ en sortie de la table $T_{aff}$ peut alors s'écrire (en utilisant la linéarité de la fonction $Lin$) :

$$r_2 = m.Aff(m^{-k} . r_1) = m.Lin(m^{-k} . (m^k . s^k + b')) + m.c$$

$$= m.Lin(s^k) + m.Lin(m^{-k} . b') + m.c$$

$$= m.Aff(s^k) + m.Lin(m^{-k} . b')$$

$$= m.Sub(s) + m.Lin(m^{-k} . b')$$

$$= M(Sub(s)) - b + m.Lin(m^{-k} . b')$$

On obtient ainsi en sortie de la table de substitution $T_{aff}$ une représentation masquée de $Sub(s)$ avec un masquage affine de même masque multiplicatif $m$.

De façon optionnelle, et tel qu'illustré sur les figures 4 et 5, le procédé 100 peut comporter deux étapes supplémentaires 104 et 105 pour s'affranchir du terme $m.Lin(m^{-k} . b')$ obtenu en sortie de la table de substitution $T_{aff}$.

Dans ce but le procédé 100 comporte une application 104 d'une troisième table de substitution $T_{cor}$ aux variables m et $b'$. Avantageusement, tous les éléments de la table $T_{cor}$ sont préalablement calculés pour les différentes valeurs pouvant être prises par $b'$ et m.

Il est important de noter que la table $T_{cor}$ est évaluée en fonction de $b'$ et m mais sans utiliser $M(s)$.

Tel qu'illustré sur la figure 4, la table de substitution $T_{cor}$ prend en entrée $b'$ et m et fournit en sortie le résultat $r_3 = m.Lin(m^{-k} . b') - b''$. La variable $b''$ est une variable déterminée en fonction de $m$ et/ou $b'$. La variable $b''$ présente une distribution indépendante de la variable secrète $s$. Il est possible par exemple de prendre $b'' = b'$. Toutefois, il est avantageux de choisir une valeur pour $b'$ différente de la valeur de $b$ car cela permet de réduire l'impact d'une fuite en transition entre la sortie de la table $T_{pow}$ et la sortie de la table $T_{cor}$. La variable $b''$ peut éventuellement être choisie dans un ensemble différent de l'ensemble utilisé pour choisir la variable $b'$. De préférence, la variable $b''$ est choisie pour prendre des valeurs non nulles au moins pour certaines valeurs de m et $b'$.

Le procédé 100 comporte ensuite une soustraction 105 au résultat $r_2$ obtenu en sortie de la deuxième table de substitution $T_{aff}$ du résultat $r_3$ obtenu en sortie de la troisième table de substitution $T_{cor}$ pour obtenir un résultat $r_4$ sous la forme :

$$r_4 = r_2 - r_3 = m.Sub(s) + b''$$

On obtient ainsi une représentation masquée de $Sub(s)$ avec un masquage affine de masque multiplicatif m et de masque booléen $b''$. On peut noter qu'en choisissant $b'' = b' = b$, on obtient en sortie une représentation masquée de $Sub(s)$ avec exactement le même masquage que celui appliqué à la variable secrète s.

L'étape de soustraction 105 pourrait également être optionnelle. La table de substitution $T_{cor}$ pourrait en effet directement fournir la valeur de la partie booléenne du résultat $r_2$ obtenu en sortie de la table $T_{aff}$. Dans ce cas, la table $T_{cor}$ prend en entrée $b$' et $m$ et calcule $m.Lin(m^{-k}.b')$.

L'impact mémoire du procédé 100 dépend de la taille des ensembles dans lesquels sont choisies les variables $b$, $b$' et $m$. Comme indiqué précédemment, ces variables peuvent être choisies chacune dans un sous-ensemble de $E$. Notons $C_E$ le cardinal de l'ensemble $E$, $C_b$ et $C_{b'}$ les cardinaux des ensembles dans lequel sont choisies les variables $b$ et $b$' respectivement (ensembles des masques booléens), et $C_m$ le cardinal de l'ensemble dans lequel est choisie la variable m (ensemble des masques multiplicatifs). Alors, le nombre d'éléments dans la table $T_{pow}$ est égal à $C_E \times C_b$ ; le nombre d'éléments dans la table $T_{aff}$ est égal à $C_E \times C_m$ et le nombre d'éléments dans la table $T_{cor}$ est égal à $C_{b'} \times C_m$.

Par comparaison, si on utilisait une seule table de substitution S-Box' correspondant à la fonction *Sub'* décrite en référence à la figure 3, alors il faudrait que la table S-Box' comporte un nombre d'éléments égal à $C_E \times C_b \times C_m$.

Pour limiter l'impact mémoire du procédé 100, il est avantageux de choisir des ensembles restreints pour les variables b et m, de telle sorte que la somme des tailles (en nombre d'éléments) des tables $T_{pow}$, $T_{aff}$ et $T_{cor}$ reste faible devant la taille de la table S-Box', c'est-à-dire pour que :

$$C_E \times C_b + C_E \times C_m + C_{b'} \times C_m \ll C_E \times C_b \times C_m$$

Par exemple si $C_E$ = 256 et $C_b$ = $C_{b'}$ = $C_m$ = 16, alors la somme des tailles des tables $T_{pow}$, $T_{aff}$ et $T_{cor}$ est égale à 8448 alors que la taille de la table S-Box' est égale à 65536.

Toutefois, plus $C_b$ et $C_m$ sont grands et meilleur sera le niveau de sécurité. Il y a donc un compromis entre impact mémoire et sécurité.

D'autre part, le procédé 100 permet d'améliorer le niveau de sécurité car chaque évaluation avec l'une des tables de substitution $T_{pow}$, $T_{aff}$ et $T_{cor}$ est effectuée en manipulant un sous-ensemble strict des parties (« shares ») obtenues par le masquage, et cela rend plus difficile une attaque par canal auxiliaire.

Enfin, le procédé 100 offre de bonnes performances en termes de rapidité d'exécution. En effet, chaque évaluation avec l'une des tables de substitution $T_{pow}$, $T_{aff}$ et $T_{cor}$ est rapide à effectuer car les tables sont précalculées.

Lorsqu'un ensemble restreint est utilisé pour le choix du masque multiplicatif m et/ou des masques booléens $b$ et $b$', il est envisageable d'associer à chaque masque un index. Par exemple si $E$ est l'ensemble $GF(256)$, et si $C_b$ = 16, on a alors seize masques booléens possibles dont les valeurs sont comprises entre 0 et 255 inclus. On peut alors associer à chaque valeur possible du masque booléen $b$ un index différent dont la valeur est comprise entre 0 à 15. Cette association présente plusieurs intérêts. Utiliser un index au lieu du masque permet en effet d'éviter de manipuler la valeur du masque et ainsi diminuer l'impact des fuites en transition. D'autre part, utiliser un index au lieu du masque permet de limiter la taille de la mémoire à allouer pour construire la table de substitution (sans l'index, les valeurs en entrée seraient comprises entre 0 et 255 au lieu d'être comprises entre 0 et 15).

Les tables de substitution $T_{pow}$, $T_{aff}$ et $T_{cor}$ prennent chacune deux variables en entrée. Il est possible de les implémenter en utilisant des tables à deux entrées, ou en utilisant des tables dont l'unique entrée est une combinaison des deux variables concernées (par exemple pour la table de substitution $T_{pow}$, on peut concaténer $M(s)$ avec l'index du masque booléen $b$).

Avantageusement, le sous-ensemble $E_m$ et le sous-ensemble $E_b$ peuvent être différents et choisis de manière à ce que la concaténation de $M(s)$ avec l'index du masque $m$ ou $b$ ait un poids de Hamming constant quel que soit la valeur de s, voire de manière à ce que la distance de Hamming entre un masque et cette concaténation soit également constante. De telles dispositions permettent d'éviter des fuites en valeurs et de limiter encore davantage les fuites en transition.

Il convient de noter que, pour l'exemple décrit ci-dessus en référence aux figures 3 et 4, on s'est placé dans le cas d'un corps fini binaire. Le masquage affine est alors la combinaison d'un masquage multiplicatif avec un masquage booléen, et l'opération d'addition du corps fini binaire correspond à un OU exclusif (XOR). Rien n'empêche toutefois de se placer dans le cas d'un corps fini non binaire. Dans ce cas, le masquage affine est la combinaison d'un masquage multiplicatif avec un masquage arithmétique, et l'opération d'addition du corps fini non binaire correspond à une addition modulaire (et dans ce cas le terme « booléen » utilisé ci-avant dans la description des figures 3 et 4 peut être remplacé par le terme « arithmétique »), et la multiplication est l'opération de multiplication modulaire. Dans ce cas, les masques multiplicatifs doivent être choisis dans l'ensembles des nombres premiers avec le modulo (par exemple, dans l'ensemble des nombres impairs dans le cas d'un corps fini ayant un cardinal pouvant s'écrire sous la forme d'une puissance de deux).

<u>Mise en œuvre avec une combinaison d'un masquage affine et d'un masquage carré :</u>

Les figures 6 et 7 illustrent le cas où le procédé 100 décrit à la figure 5 repose sur une combinaison d'un masquage affine avec un masquage carré (au lieu d'un simple masquage affine comme dans le cas décrit ci-avant en référence aux figures 3 et 4). Dans le cas où un masquage carré est utilisé, le corps fini $E$ doit être un corps fini binaire.

Le masquage « carré » d'une variable secrète est décrit dans la demande de brevet FR 2203809 déposée le 25 avril 2022. Le masquage carré comporte la détermination d'une variable aléatoire p et une élévation à la puissance $2^p$ de la variable secrète. Le masquage carré est basé sur la linéarité de l'opération d'élévation à la puissance d'une puissance de deux par rapport à l'addition du corps fini binaire (OU exclusif) :

$$\forall\big(a, b \in GF(2^n)\big), (a + b)^{2^p} = a^{2^p} + b^{2^p}$$

Le masquage carré est particulièrement performant pour les opérations d'addition, de multiplication et de puissance en tant qu'opérations de corps fini binaire grâce au comportement linéaire de ces opérations vis-à-vis d'une élévation à une puissance de deux. En outre, le masquage carré est particulièrement robuste contre les fuites en transition.

Tel qu'illustré sur les figures 6 et 7, l'étape de masquage 101 de la variable secrète s comporte alors un tirage aléatoire (« rand ») d'une valeur pour une variable m correspondant à un masque multiplicatif, un tirage aléatoire d'une valeur pour une variable *b* correspondant à un masque booléen, et un tirage aléatoire d'une valeur pour une variable *p* correspondant au masquage carré.

Tel qu'illustré sur les figures 6 et 7, la fonction de masquage peut alors s'écrire sous la forme $M(s) = m.s^{2p} + b$ , chacune des variables *m, p* et *b* étant non nulle et choisie aléatoirement parmi les éléments de *E* ou parmi un sous-ensemble *de E*. Il convient de noter que le cas où la variable *p* est nulle correspond au cas du masquage affine décrit ci-avant en référence aux figures 3 et 4. Le cas où la variable *m* est choisie dans l'ensemble {1} correspond au cas d'une combinaison d'un masquage carré avec un masquage booléen. $\underline{M(s)}$, *m, b* et *p* correspondent alors aux quatre parties (« shares ») du masquage de la variable secrète s.

Tel qu'illustré sur la figure 6, pour prendre en compte le masquage 101, il serait envisageable de déterminer une table de substitution S-Box' dont la fonction de substitution associée *Sub'* est telle que $Sub'(m.s^{2p} + b) = m.Sub(s)^{2p} + b''$. Autrement dit, cette solution reviendrait à déterminer une table de substitution S-Box' telle que la sortie de la table de substitution S-Box' soit une représentation masquée (avec le même masque multiplicatif *m* et le même masque carré p) du résultat qui aurait été obtenu en appliquant la table de substitution S-Box à la variable secrète s. Toutefois, cette solution nécessiterait de recalculer la table S-Box' à chaque fois que les variables de masquage *m, b* et *p* sont changées, ce qui impacterait significativement les performances de l'algorithme. Il serait également envisageable de précalculer toutes les valeurs possibles pour la table S-Box' en fonction de toutes les valeurs pouvant être prises par le triplet de variables (*m, b, p*)*, mais cela impacterait significativement la taille de la mémoire requise.

Pour pallier ces problèmes, la table S-Box' est décomposée en au moins deux tables de substitution. Ainsi, et tel qu'illustré sur la figure 7, le procédé 100 comporte une application 102 d'une première table de substitution $T_{pow}$ à la représentation masquée $M(s)$ de la variable secrète. Cette première table de substitution $T_{pow}$ correspond à l'étape d'élévation à la puissance *k* de la fonction non-linéaire *Sub*. En effet, la fonction de substitution associée à $T_{pow}$ comporte un calcul d'une élévation à la puissance *k* appliqué à $M(s)$.

Avantageusement, tous les éléments de la table $T_{pow}$ sont préalablement calculés pour les différentes valeurs pouvant être prises par $M(s)$ et b.

Dans l'exemple illustré sur la figure 7, la table de substitution $T_{pow}$ prend en entrée $M(s)$ et b et fournit en sortie le résultat $r_1 = (M(s) - b)^k + b'$, où b' est une variable déterminée en fonction de $M(s)$ et/ou *b*. La variable *b'* présente une distribution indépendante de la variable secrète *s*. Il est possible par exemple de prendre b' = b. Toutefois, il est avantageux de choisir une valeur pour b' différente de la valeur de *b* car cela permet de réduire l'impact d'une fuite en transition entre l'entrée et la sortie de cette table. La variable *b'* peut éventuellement être choisie dans un ensemble différent de l'ensemble utilisé pour choisir la variable *b*. De préférence, la variable *b'* est choisie pour prendre des valeurs non nulles au moins pour certaines valeurs de $M(s)$ et *b*.

Il est important de noter que la table $T_{pow}$ est évaluée en fonction de $M(s)$ et b mais sans utiliser les variables *m* et *p*.

Le résultat $r_1$ en sortie de la table $T_{pow}$ peut alors s'écrire sous la forme :

$$r_1 = (M(s) - b)^k + b' = m^k.s^{k.2^p} + b'$$

Tel qu'illustré sur la figure 7, le procédé 100 comporte une application 103 d'une deuxième table de substitution $T_{aff}$ au résultat $r_1$ obtenu en sortie de la première table de substitution $T_{pow}$. Cette deuxième table de substitution $T_{aff}$ correspond à l'étape affine *Aff* de la fonction non-linéaire *Sub*. En effet, la fonction de substitution associée à $T_{aff}$ comporte un calcul de la fonction affine *Aff* appliqué (indirectement) à $r_1$. Par exemple, et tel qu'illustré sur la figure 7, la fonction affine *Aff* est appliqué à $(m^{-k}.r_1)^{2-p}$).

Avantageusement, tous les éléments de la table $T_{aff}$ sont préalablement calculés pour les différentes valeurs pouvant être prises par $r_1$, *m* et *p*.

Il est important de noter que la table $T_{aff}$ est évaluée en fonction de $r_1$, $m$ et $p$ mais sans utiliser la variable $b$.

Tel qu'illustré sur la figure 7, la table de substitution $T_{aff}$ prend en entrée $r_1$, m et p et fournit en sortie le résultat

$$r_2 = m.Aff\left(\left(m^{-k}.r_1\right)^{2^{-p}}\right)^{2^p}$$. Le résultat $r_2$ en sortie de la table $T_{aff}$ peut alors s'écrire (en utilisant la linéarité de la fonction *Lin* et la linéarité de l'élévation à une puissance d'une puissance de deux) :

$$r_2 = m.Aff\left(\left(m^{-k}.r_1\right)^{2^{-p}}\right)^{2^p} = m.Lin\left(\left(m^{-k}.\left(m^k.s^{k.2^p} + b'\right)\right)^{2^{-p}}\right)^{2^p} + m.c^{2^p}$$

$$= m.Lin\left(\left(s^{k.2^p} + m^{-k}.b'\right)^{2^{-p}}\right)^{2^p} + m.c^{2^p}$$

$$= m.Lin\left(s^k + m^{-k.2^{-p}}.b'^{2^{-p}}\right)^{2^p} + m.c^{2^p}$$

$$= m.Lin(s^k)^{2^p} + m.lin\left(m^{-k.2^{-p}}.b'^{2^{-p}}\right)^{2^p} + m.c^{2^p}$$

$$= m.Aff(s^k)^{2^p} + m.lin\left(m^{-k.2^{-p}}.b'^{2^{-p}}\right)^{2^p}$$

$$= m.Sub(s)^{2^p} + m.lin\left(m^{-k.2^{-p}}.b'^{2^{-p}}\right)^{2^p}$$

$$= M(Sub(s)) - b + m.lin\left(m^{-k.2^{-p}}.b'^{2^{-p}}\right)^{2^p}$$

On obtient ainsi en sortie de la table de substitution $T_{aff}$ une représentation masquée de *Sub(s)* avec avec le même masque multiplicatif m et le même masque carré *p*.

De façon optionnelle, et tel qu'illustré sur la figure 7, le procédé 100 peut comporter deux étapes supplémentaires 104 et 105 pour s'affranchir du terme $m.lin\left(m^{-k.2^{-p}}.b'^{2^{-p}}\right)^{2^p}$ obtenu en sortie de la table de substitution $T_{aff}$.

Dans ce but le procédé 100 comporte une application 104 d'une troisième table de substitution $T_{cor}$ aux variables $b'$, $m$ et $p$. Avantageusement, tous les éléments de la table $T_{cor}$ sont préalablement calculés pour les différentes valeurs pouvant être prises par $b$, $m$ et $p$.

Il est important de noter que la table $T_{cor}$ est évaluée en fonction de $b'$, m et p mais sans utiliser $M(s)$ .

Tel qu'illustré sur la figure 7, la table de substitution $T_{cor}$ prend en entrée $b'$, m et p et fournit en sortie le résultat

$$r_3 = m.lin\left(m^{-k.2^{-p}}.b'^{2^{-p}}\right)^{2^p} - b''$$. La variable $b''$ est une variable déterminée en fonction d'un ou plusieurs éléments parmi m, $b'$ et $p$. La variable $b''$ présente une distribution indépendante de la variable secrète $s$. Il est possible par exemple de prendre $b'' = b'$. Toutefois, il est avantageux de choisir une valeur pour $b''$ différente de la valeur de $b'$ car cela permet de réduire l'impact d'une fuite en transition entre la sortie de la table $T_{pow}$ et la sortie de la table $T_{cor}$. La variable $b''$ peut éventuellement être choisie dans un ensemble différent de l'ensemble utilisé pour choisir la variable $b'$. De préférence, la variable $b''$ est choisie pour prendre des valeurs non nulles au moins pour certaines valeurs de $m$, $b'$ et $p$.

Le procédé 100 comporte ensuite une soustraction 105 au résultat $r_2$ obtenu en sortie de la deuxième table de substitution $T_{aff}$ du résultat $r_3$ obtenu en sortie de la troisième table de substitution $T_{cor}$ pour obtenir un résultat $r_4$ sous la forme :

$$r_4 = r_2 - r_3 = m.Sub(s)^{2^p} + b''$$

On obtient ainsi une représentation masquée de *Sub(s)* avec une combinaison d'un masquage affine et d'un masquage carré, avec un masque multiplicatif $m$, un masque carré $p$ et un masque booléen $b''$. On peut noter qu'en choisissant $b'' = b$, on obtient en sortie une représentation masquée de *Sub(s)* avec exactement le même masquage que celui appliqué à la variable secrète $s$.

L'étape de soustraction 105 pourrait également être optionnelle. La table de substitution $T_{cor}$ pourrait en effet directement fournir la valeur de la partie booléenne du résultat $r_2$ obtenu en sortie de la table $T_{aff}$. Dans ce cas, la table $T_{aff}$

prend en entrée $b'$, $m$ et p et calcule $m.Lin\left(m^{-k.2^{-p}}.b'^{2^{-p}}\right)^{2^p}$ .

Les avantages du procédé 100 mentionnés précédemment pour le cas du masquage affine sont également valables pour le cas de la combinaison d'un masquage affine avec un masquage booléen (rapidité d'exécution car les tables sont précalculées, impact mémoire limitée par l'utilisation de deux ou trois tables de substitution au lieu d'une seule, sécurité renforcée par le fait d'utiliser pour chaque table de substitution seulement un sous-ensemble strict des parties (« shares ») obtenues par le masquage de la variable secrète s).

En outre, le fait d'utiliser un masquage carré en plus du masquage affine peut permettre d'améliorer le niveau de sécurité du procédé 100, notamment pour limiter les fuites en transition.

Si on note $C_c$ le cardinal de l'ensemble dans lequel est choisie la variable $p$ (ensemble des masques carrés). Alors, le nombre d'éléments dans la table $T_{pow}$ est égal à $C_E \times C_b$ ; le nombre d'éléments dans la table $T_{aff}$ est égal à $C_E \times C_m \times C_c$ et le nombre d'éléments dans la table $T_{cor}$ est égal à $C_b \times C_m \times C_c$.

Par comparaison, si on utilisait une seule table de substitution S-Box' correspondant à la fonction *Sub'* décrite en référence à la figure 6, alors il faudrait que la table S-Box' comporte un nombre d'éléments égal à $C_E \times C_b \times C_m \times C_c$.

Pour limiter l'impact mémoire du procédé 100, il est avantageux de choisir des ensembles restreints pour les variables *b, m* et *p*, de telle sorte que la somme des tailles des tables $T_{pow}$, $T_{aff}$ et $T_{cor}$ reste faible devant la taille de la table S-Box', c'est-à-dire pour que :

$$C_E \times C_b + C_E \times C_m \times C_c + C_{b'} \times C_m \times C_c \ll C_E \times C_b \times C_m \times C_c$$

Là encore, il est possible d'utiliser un index au lieu du masque carré *p* lors des accès aux tables de substitution $T_{aff}$ et $T_{cor}$ (pour réduire la taille mémoire de ces tables).

Les tables de substitution $T_{pow}$, $T_{aff}$ et $T_{cor}$ prennent chacune deux ou trois variables en entrée. Il est possible de les implémenter en utilisant des tables à deux ou trois entrées, ou en utilisant des tables dont l'unique entrée est une combinaison des deux ou trois variables concernées (par exemple pour la table de substitution $T_{aff}$, on peut concaténer $r_1$ avec l'index du masque booléen m et avec l'index du masque carré *p*).

Exemple d'application à la S-Box de l'AES :

Une implémentation de l'invention a été évaluée en termes de performance et de sécurité en appliquant un masquage affine à une variable secrète en entrée de la S-Box de l'AES. On se place donc dans le corps fini binaire $E = GF(256) = GF(2^8)$.

Dans le cas de l'AES, la fonction *Lin* est définie sur $GF(2)$ et elle linéaire par rapport au « ou exclusif » dans le corps fini *E.*

Le masque booléen *b* et le masque multiplicatif *m* sont chacun choisis dans un sous-ensemble de seize valeurs possibles. Les valeurs du sous-ensemble de masques booléens et du sous-ensemble de masques multiplicatifs ont été choisies de manière à minimiser d'un point de vue théorique la fuite en poids de Hamming et en distance de Hamming des variables manipulées au cours des calculs. Dans cet exemple d'implémentation, on utilise des tables à simple entrée, en concaténant les deux variables d'entrée pour accéder aux tables.

Un microcontrôleur STM32F7 a été utilisé pour cette évaluation. L'exécution d'un AES masqué en utilisant le procédé 100 selon l'invention pour l'évaluation de la S-Box prend 7061 cycles d'horloge. Pour référence, une implémentation directe de la norme de l'AES non sécurisée prend 7145 cycles d'horloge. Les deux implémentations sont compilées en activant les optimisations du compilateur à leur niveau le plus élevé (-O3). Une implémentation de l'AES avec un masquage booléen d'ordre '1' utilisant des tables recalculées pour la S-Box prend 10831 cycles.

L'implémentation selon l'invention est donc plus efficace qu'une implémentation par masquage booléen, et elle présente de très bonnes performances en termes de rapidité d'exécution (sensiblement aussi rapide qu'une implémentation basique non sécurisée).

Comparée à des implémentations non sécurisées mais plus optimisées, l'implémentation selon l'invention présente un temps d'exécution deux à quatre fois plus long, mais bien meilleur que l'implémentation de masquage booléen d'ordre '1' qui présente un temps d'exécution trois à six fois plus long.

Du point de vue de la sécurité, l'implémentation selon l'invention ne montre aucune fuite suite à un t-test non spécifique mettant en jeu 400 000 mesures électromagnétiques (t-value mesurée de 4.24, inférieure à la limite de détection du t-test qui est de 4.5). A titre de comparaison, une implémentation non protégée montre des pics de t-value à plus de 300 (à comparer encore une fois à la limite fixée à 4.5), et l'implémentation en masquage booléen montre des pics à plus de 40 (notamment dû à des effets non contrôlés comme des fuites en transitions, qui sont mieux prises en charge par le masquage affine).

La solution proposée par l'invention permet donc d'obtenir un très bon compromis entre sécurité et performance.

La description ci-avant illustre clairement que, par ses différentes caractéristiques et leurs avantages, la présente invention atteint les objectifs fixés. En particulier, l'invention permet d'optimiser (en termes de temps de calcul et d'empreinte mémoire) la prise en compte d'un masquage affine éventuellement combiné à un masquage carré lors de l'application d'une fonction de substitution *Sub* non linéaire à une variable secrète s.

Il est à noter que les modes de mise en œuvre et de réalisation considérés ci-dessus ont été décrits à titre d'exemples non limitatifs, et que d'autres variantes sont par conséquent envisageables.

Notamment, rien n'empêcherait d'ajouter des constantes identiques (ou même des expressions dépendant de m) dans les tables $T_{cor}$ et $T_{aff}$, puisque les résultats de ces deux tables peuvent être soustraits l'un à l'autre. Rien n'empêcherait non plus de modifier les résultats obtenus en sortie des tables par des fonctions injectives. Il suffit en effet de modifier la table suivante pour compenser l'effet de cette fonction injective. Par exemple, la table $T_{pow}$ pourrait calculer $3 \times (m^k . s^k + b')$ (au lieu de calculer $m^k . s^k + b'$), et la table $T_{aff}$ pourrait prendre en compte que sa première entrée est multipliée par trois et qu'il faut la diviser par trois avant de l'utiliser. De telles modifications ne représentent que des variantes de l'invention.

## Revendications

1. Procédé (100) pour protéger un dispositif électronique (10) contre une attaque par canal auxiliaire, ledit dispositif électronique (10) comportant un processeur (11) configuré pour exécuter un algorithme cryptographique manipulant des variables appartenant à un corps fini $E$ et impliquant au moins une fonction de substitution *Sub* non-linéaire appliquée à une variable secrète s à protéger, ladite fonction *Sub* comportant une fonction d'élévation à une puissance $k$ et une fonction affine *Aff* telles que $Sub(s) = Aff(s^k) = Lin(s^k) + c$, où c est une constante et *Lin* est une fonction linéaire par rapport à une opération d'addition du corps fini E, le procédé étant mis en œuvre par le processeur (11) du dispositif électronique (10), ledit procédé (100) comportant :

   - un masquage (101) de la variable secrète s par une fonction de masquage M telle que $M(s) = m. s + b$, chacune des variables $m$ et $b$ étant choisie aléatoirement parmi les éléments de E ou parmi un sous-ensemble de $E$, la variable m étant choisie non nulle ;
   - une application (102) à $M(s)$, en fonction de b, d'une première table de substitution $T_{pow}$ correspondant à la fonction d'élévation à la puissance $k$ et dont les éléments ont été préalablement calculés pour les différentes valeurs pouvant être prises par $M(s)$ et b, le calcul d'un élément de $T_{pow}$ comportant un calcul de $(M(s) - b)^k + b'$, où $b'$ est une variable déterminée en fonction de $M(s)$ et/ou $b$ ;
   - une application (103) au résultat $r_1$ obtenu en sortie de la première table de substitution $T_{pow}$, en fonction de m, d'une deuxième table de substitution $T_{aff}$ correspondant à la fonction affine *Aff* et dont les éléments ont été préalablement calculés pour les différentes valeurs pouvant être prises par $r_1$ et m, le calcul d'un élément de $T_{aff}$ comportant un calcul de $m.Aff (m^{-k}.r_1)$.

2. Procédé (100) selon la revendication 1 comportant :

   - Une application (104) aux variables $m$ et $b'$ d'une troisième table de substitution $T_{cor}$ dont les éléments ont été préalablement calculés pour les différentes valeurs pouvant être prises par $m$ et $b'$, le calcul d'un élément de $T_{cor}$ comportant un calcul de $m.Lin(m^{-k}.b') - b''$, où b'' est une variable déterminée en fonction de $m$ et/ou $b'$ ;
   - une soustraction (105) au résultat $r_2$ obtenu en sortie de la deuxième table de substitution $T_{aff}$ du résultat $r_3$ obtenu en sortie de la troisième table de substitution $T_{cor}$ pour obtenir un résultat $r_4$ sous la forme $r_4 = r_2 - r_3 = m.Sub(s) + b''$.

3. Procédé (100) pour protéger un dispositif électronique (10) contre une attaque par canal auxiliaire, ledit dispositif électronique (10) comportant un processeur (11) configuré pour exécuter un algorithme cryptographique manipulant des variables appartenant à un corps fini $E = GF(2^n)$ et impliquant au moins une fonction de substitution *Sub* non-linéaire appliquée à une variable secrète s à protéger, ladite fonction *Sub* comportant une fonction d'élévation à une puissance $k$ et une fonction affine *Aff* telles que $Sub(s) = Aff(s^k) = Lin(s^k) + c$, où $c$ est une constante et *Lin* est une fonction linéaire par rapport à une opération d'addition du corps fini $E$, le procédé étant mis en œuvre par le processeur (11) du dispositif électronique (10), ledit procédé (100) comportant :

   - un masquage (101) de la variable secrète s par une fonction de masquage M telle que $M(s) = m.s^{2p} + b$, chacune des variables $m$, $b$ et $p$ étant choisie aléatoirement parmi les éléments de $E$ ou parmi un sous-ensemble de $E$, chacune des variables $m$ et $p$ étant choisie non nulle ;
   - une application (102) à $M(s)$, en fonction de b, d'une première table de substitution $T_{pow}$ correspondant à la fonction d'élévation à la puissance $k$ et dont les éléments ont été préalablement calculés pour les différentes valeurs pouvant être prises par $M(s)$ et b, le calcul d'un élément de $T_{pow}$ comportant un calcul de $(M(s) - b)^k + b'$, où

*b'* est une variable déterminée en fonction de *M(s)* et/ou *b* ;
- une application (103) au résultat $r_1$ obtenu en sortie de la première table de substitution $T_{pow}$, en fonction de *m* et *p,* d'une deuxième table de substitution $T_{aff}$ correspondant à la fonction affine *Aff* et dont les éléments ont été préalablement calculés pour les différentes valeurs pouvant être prises par $r_1$, *m* et *p*, le calcul d'un élément de $T_{aff}$ comportant un calcul de $m.Aff\big((m^{-k}.r_1)^{2^{-p}}\big)^{2^p}$ .

4.  Procédé (100) selon la revendication 3 comportant :

    - une application (104) aux variables *m, p* et *b'* d'une troisième table de substitution $T_{cor}$ dont les éléments ont été préalablement calculés pour les différentes valeurs pouvant être prises par *m*, p et *b',* le calcul d'un élément de $T_{cor}$ comportant un calcul de $m.lin\big(m^{-k.2^{-p}}.b'^{2^{-p}}\big)^{2^p} - b''$ , où *b''* est une variable déterminée en fonction d'un ou plusieurs éléments parmi *m, b'* et *p*;
    - une soustraction (105) au résultat $r_2$ obtenu en sortie de la deuxième table de substitution $T_{aff}$ du résultat $r_3$ obtenu en sortie de la troisième table de substitution $T_{cor}$ pour obtenir un résultat $r_4$ sous la forme $r_4 = r_2 - r_3 = m.Sub(s)^{2p} + b''$.

5.  Procédé (100) selon l'une quelconque des revendications 1 à 4 dans lequel la variable *b* est choisie dans un sous-ensemble $E_b$ strict de E, chacune des valeurs pouvant être prise par la variable *b* est associée à un index, et l'application (102) de la première table de substitution $T_{pow}$ est effectuée en fonction de l'index associé à la variable *b*.

6.  Procédé (100) selon l'une quelconque des revendications 1 à 5 dans lequel la variable m est choisie dans un sous-ensemble $E_m$ strict de E, chacune des valeurs pouvant être prise par la variable m est associée à un index, et l'application (103) de la deuxième table de substitution $T_{aff}$ est effectuée en fonction de l'index associé à la variable *m*.

7.  Procédé (100) selon une combinaison des revendications 5 et 6, dans lequel le sous-ensemble $E_m$ et le sous-ensemble $E_b$ sont différents et choisis de manière à obtenir un poids de Hamming constant pour toutes les valeurs pouvant être prises par une concaténation de *M(s)* avec l'index correspondant à *m* ou *b.*

8.  Procédé (100) selon l'une quelconque des revendications 4 à 7 en combinaison avec la revendication 3, dans lequel la variable *p* est choisie dans un plus petit ensemble $E_p$ d'entiers naturels, ou dans un sous-ensemble strict de l'ensemble $E_p$, l'ensemble $E_p$ étant défini tel que, pour tout entier naturel *k'* n'appartenant pas à $E_p$, il existe une valeur *k* appartenant à $E_p$ telle que, pour toute variable *x* appartenant à E, $x^{2k'}$ est égal à $x^{2k}$.

9.  Procédé (100) selon la revendication 8 dans lequel chacune des valeurs pouvant être prise par la variable *p* est associée à un index, et l'application (103) de la deuxième table de substitution $T_{aff}$ est effectuée en fonction de l'index associé à la variable p.

10. Procédé (100) selon l'une quelconque des revendications 1 à 9 dans lequel l'algorithme cryptographique est l'algorithme « Advanced Encryption Standard », aussi connu sous l'acronyme AES, et où E=GF($2^8$).

11. Produit programme d'ordinateur pour l'exécution d'un algorithme cryptographique, ledit programme comprenant des instructions de code (13) qui, lorsqu'elles sont exécutées par un processeur (11) d'un dispositif électronique (10), configurent ledit processeur (11) pour exécuter un procédé (100) selon l'une quelconque des revendications 1 à 10.

12. Dispositif électronique (10) comprenant un processeur (11) et une mémoire (13) mémorisant un produit programme d'ordinateur selon la revendication 11, ledit processeur (11) étant configuré pour exécuter ledit programme d'ordinateur.

**Patentansprüche**

1.  Verfahren (100) zum Schutz einer elektronischen Vorrichtung (10) vor einem Angriff über einen Hilfskanal, wobei die elektronische Vorrichtung (10) einen Prozessor (11) aufweist, der so konfiguriert ist, dass er einen kryptografischen Algorithmus ausführt, der Variablen manipuliert, die zu einem endlichen Körper E gehören, und mindestens eine nichtlineare Substitutionsfunktion Sub einbezieht, die auf eine zu schützende geheime Variable s angewendet wird, wobei die Funktion *Sub* eine Funktion zur Erhöhung auf eine Leistung *k* und eine affine Funktion *Aff* aufweist, so dass $Sub(s) = Aff(s^k) = Lin(s^k) + c$, wobei c eine Konstante ist und *Lin* eine lineare Funktion in Bezug auf einen Additionsvorgang des endlichen Körpers E ist, wobei das Verfahren vom Prozessor (11) der elektronischen Vorrichtung (10) umgesetzt wird, das Verfahren (100) aufweisend:

- Maskieren (101) der geheimen Variable s durch eine Maskierungsfunktion M, so dass $M(s) = m.s + b$, wobei jede der Variablen *m* und *b* zufällig aus den Elementen von E oder aus einer Untergruppe von E ausgewählt wird, wobei die Variable m ungleich null ausgewählt wird;
- Anwenden (102) auf *M(s)*, in Abhängigkeit von *b*, einer ersten Substitutionstabelle $T_{pow}$, die der Funktion zur Erhöhung der Leistung *k* entspricht und deren Elemente zuvor für die verschiedenen Werte berechnet wurden, die von *M(s)* und *b* genommen werden können, wobei die Berechnung eines Elements von $T_{pow}$ eine Berechnung von $(M(s) - b)^k + b'$ aufweist, wobei *b'* eine Variable ist, die in Abhängigkeit von *M(s)* und/oder *b* bestimmt wird;
- Anwenden (103) auf das Ergebnis $r_1$, das als Ausgang der ersten Substitutionstabelle $T_{pow}$, in Abhängigkeit von *m*, erhalten wurde, einer zweiten Substitutionstabelle $T_{aff}$, die der affinen Funktion *Aff* entspricht und deren Elemente zuvor für die verschiedenen Werte berechnet wurden, die von $r_1$ und *m* genommen werden können, wobei die Berechnung eines Elements von $T_{aff}$ eine Berechnung von $m.Aff(m^{-k}.r_1)$ aufweist.

2. Verfahren (100) nach Anspruch 1, aufweisend:

- Anwenden (104) auf die Variablen m und *b'* einer dritten Substitutionstabelle $T_{cor}$, deren Elemente zuvor für die verschiedenen Werte berechnet wurden, die von *m* und *b'* genommen werden können, wobei die Berechnung eines Elements von $T_{cor}$ eine Berechnung von $m.Lin(m^{-k}.b') - b''$ aufweist, wobei *b''* eine Variable ist, die in Abhängigkeit von *m* und/oder *b'* bestimmt wird;
- Subtrahieren (105) vom Ergebnis $r_2$, das am Ausgang der zweiten Substitutionstabelle $T_{aff}$ erhalten wurde, des Ergebnisses $r_3$, das am Ausgang der dritten Substitutionstabelle $T_{cor}$ erhalten wird, um ein Ergebnis $r_4$ in der Form $r_4 = r_2 - r_3 = m.Sub(s) + b''$ zu erhalten.

3. Verfahren (100) zum Schutz einer elektronischen Vorrichtung (10) vor einem Angriff über einen Hilfskanal, wobei die elektronische Vorrichtung (10) einen Prozessor (11) aufweist, der so konfiguriert ist, dass er einen kryptografischen Algorithmus ausführt, der Variablen manipuliert, die zu einem endlichen Körper $E = GF(2n)$ gehören, und mindestens eine nichtlineare Substitutionsfunktion Sub einbezieht, die auf eine zu schützende geheime Variable s angewendet wird, wobei die Funktion *Sub* eine Funktion zur Erhöhung auf eine Leistung *k* und eine affine Funktion *Aff* aufweist, so dass $Sub(s) = Aff(s^k) = Lin(s^k) + c$, wobei c eine Konstante ist und *Lin* eine lineare Funktion in Bezug auf einen Additionsvorgang des endlichen Körpers *E* ist, wobei das Verfahren vom Prozessor (11) der elektronischen Vorrichtung (10) umgesetzt wird, das Verfahren (100) aufweisend:

- Maskieren (101) der geheimen Variable s durch eine Maskierungsfunktion M, so dass $M(s) = m.s^{2p} + b$, wobei jede der Variablen *m*, *b* und *p* zufällig aus den Elementen von *E* oder aus einer Untergruppe von *E* ausgewählt wird, wobei jede der Variablen *m* und *p* ungleich null ausgewählt wird;
- Anwenden (102) auf *M(s)*, in Abhängigkeit von *b*, einer ersten Substitutionstabelle $T_{pow}$, die der Funktion zur Erhöhung der Leistung *k* entspricht und deren Elemente zuvor für die verschiedenen Werte berechnet wurden, die von *M(s)* und *b* genommen werden können, wobei die Berechnung eines Elements von $T_{pow}$ eine Berechnung von $(M(s) - b)^k + b'$ aufweist, wobei *b'* eine Variable ist, die in Abhängigkeit von *M(s)* und/oder *b* bestimmt wird;
- Anwenden (103) auf das Ergebnis $r_1$, das als Ausgang der ersten Substitutionstabelle $T_{pow}$ in Abhängigkeit von m und *p* erhalten wurde, einer zweiten Substitutionstabelle $T_{aff}$, die der affinen Funktion *Aff* entspricht und deren Elemente zuvor für die verschiedenen Werte berechnet wurden, die von $r_1$, m und *p* genommen werden können, wobei die Berechnung eines Elements von $T_{aff}$ eine Berechnung von $m.Aff\left(\left(m^{-k}.r_1\right)^{2^{-p}}\right)^{2^p}$ aufweist.

4. Verfahren (100) nach Anspruch 3, aufweisend:

- Anwenden (104) auf die Variablen *m*, *p* und *b'* einer dritten Substitutionstabelle $T_{cor}$, deren Elemente zuvor für die verschiedenen Werte berechnet wurden, die von *m*, *p* und *b'* genommen werden können, wobei die Berechnung eines Elements von $T_{cor}$ eine Berechnung von $m.lin\left(m^{-k.2^{-p}}.b'^{2^{-p}}\right)^{2^p} - b''$ aufweist, wobei *b''* eine Variable ist, die in Abhängigkeit von einem oder mehreren Elementen von *m*, *b'* und *p* bestimmt wird;
- Subtrahieren (105) vom Ergebnis $r_2$, das am Ausgang der zweiten Substitutionstabelle $T_{aff}$ erhalten wurde, des

Ergebnisses $r_3$, das am Ausgang der dritten Substitutionstabelle $T_{cor}$ erhalten wird, um ein Ergebnis $r_4$ in der Form $r_4 = r_2 - r_3 = m.Sub(s)^{2p} +$ b"zu erhalten.

5. Verfahren (100) nach einem der Ansprüche 1 bis 4, wobei die Variable b aus einer strengen Untergruppe $E_b$ von $E$ ausgewählt wird, wobei jeder der Werte, die von der Variable $b$ genommen werden können, einem Index zugeordnet ist, und die Anwendung (102) der ersten Substitutionstabelle $T_{pow}$ in Abhängigkeit vom Index durchgeführt wird, der mit der Variable $b$ verbunden ist.

6. Verfahren (100) nach einem der Ansprüche 1 bis 5, wobei die Variable $m$ aus einer strengen Untergruppe $E_m$ von $E$ ausgewählt wird, wobei jeder der Werte, die von der Variable $m$ genommen werden können, einem Index zugeordnet ist, und die Anwendung (103) der zweiten Substitutionstabelle $T_{aff}$ in Abhängigkeit vom Index durchgeführt wird, der mit der Variable m verbunden ist.

7. Verfahren (100) nach einer Kombination der Ansprüche 5 und 6, wobei die Untergruppe $E_m$ und die Untergruppe $E_b$ unterschiedlich sind und so ausgewählt sind, dass für alle Werte, die durch eine Verkettung von $M(s)$ mit dem Index, der $m$ oder $b$ entspricht, genommen werden können, ein konstantes Hamming-Gewicht erhalten wird.

8. Verfahren (100) nach einem der Ansprüche 4 bis 7 in Kombination mit Anspruch 3, wobei die Variable p aus einer kleineren Gruppe $E_p$ natürlicher Ganzzahlen oder aus einer strengen Untergruppe der Gruppe $E_p$ ausgewählt wird, wobei die Gruppe $E_p$ so definiert ist, dass für jede natürliche Ganzzahl $k'$, die nicht zu $E_p$ gehört, ein Wert $k$ existiert, der zu $E_p$ gehört, so dass für jede Variable $x$, die zu E gehört, $x^{2k'}$ gleich $x^{2k}$ ist.

9. Verfahren (100) nach Anspruch 8, wobei jeder der Werte, die von der Variable $p$ genommen werden können, einem Index zugeordnet ist, und die Anwendung (103) der zweiten Substitutionstabelle $T_{aff}$ in Abhängigkeit vom Index durchgeführt wird, der mit der Variable $p$ verbunden ist.

10. Verfahren (100) nach einem der Ansprüche 1 bis 9, wobei der kryptografische Algorithmus der "Advanced Encryption Standard"-Algorithmus ist, auch bekannt unter dem Akronym AES, und wobei E=GF($2^8$).

11. Computerprogrammprodukt zur Ausführung eines kryptografischen Algorithmus, wobei das Programm Codeanweisungen (13) umfasst, die, wenn sie von einem Prozessor (11) einer elektronischen Vorrichtung (10) ausgeführt werden, den Prozessor (11) so konfigurieren, dass er ein Verfahren (100) nach einem der Ansprüche 1 bis 10 ausführt.

12. Elektronische Vorrichtung (10), die einen Prozessor (11) und einen Speicher (13) umfasst, der ein Computerprogrammprodukt nach Anspruch 11 speichert, wobei der Prozessor (11) so konfiguriert ist, dass er das Computerprogramm ausführt.

**Claims**

1. Method (100) for protecting an electronic device (10) against a side-channel attack, said electronic device (10) comprising a processor (11) configured to execute a cryptographic algorithm manipulating variables belonging to a finite field $E$ and involving at least one non-linear substitution function Sub applied to a secret variable $s$ to be protected, said function Sub comprising an exponentiation function to a power $k$ and an affine function $Aff$ such as $Sub(s) = Aff(s^k) = Lin(s^k) + c$, where $c$ is a constant and $Lin$ is a linear function with respect to an addition operation of the finite field $E$, the method being implemented by the processor (11) of the electronic device (10), said method (100) comprising:

    - masking (101) the secret variable s by a masking function $M$ such that $M(s) = m.s + b$, each of the variables m and b being selected randomly from the elements of $E$ or from a subset of $E$, the variable m being selected non-zero;
    - applying (102) to $M(s)$, according to $b$, a first substitution table $T_{pow}$ corresponding to the exponentiation function to the power $k$ and the elements of which have been calculated before for the different values that could be taken on by $M(s)$ and b, calculating an element of $T_{pow}$ comprising a calculation of $(M(s) - b)^k + b'$, where $b'$ is a variable determined as a function of $M(s)$ and/or b;
    - applying (103) to the result $r_1$ obtained at the output of the first substitution table $T_{pow}$, as a function of $m$, a second substitution table $T_{aff}$ corresponding to the affine function $Aff$ and the elements of which have been calculated before for the different values that could be taken on by $r_1$ and $m$, calculating an element of $T_{aff}$ comprising a calculation of $m.Aff(m^{-k}.r_1)$.

2. Method (100) according to claim 1, comprising:

- applying (104) to the variables $m$ and $b$' a third substitution table $T_{cor}$ the elements of which have been calculated before for the different values that could be taken on by $m$ and $b$', the calculation of an element of $T_{cor}$ comprising a calculation of m. $Lin$ $(m^{-k}.b') - b''$, where b'' is a variable determined as a function of m and/or $b$';
- subtracting (105) from the result $r_2$ obtained at the output of the second substitution table $T_{aff}$ the result $r_3$ obtained at the output of the third substitution table $T_{cor}$ to obtain a result $r_4$ in the form $r_4 = r_2 - r_3 = m.Sub(s) + b''$.

3. Method (100) for protecting an electronic device (10) against a side-channel attack, said electronic device (10) comprising a processor (11) configured to execute a cryptographic algorithm manipulating variables belonging to a finite field $E = GF(2'')$ and involving at least one non-linear substitution function $Sub$ applied to a secret variable s to be protected, said function $Sub$ comprising an exponentiation function to a power $k$ and an affine function $Aff$ such that $Sub(s) = Aff(s^k) = Lin(s^k) + c$, where $c$ is a constant and $Lin$ is a linear function with respect to an addition operation of the finite field $E$, the method being implemented by the processor (11) of the electronic device (10), said method (100) comprising:

- masking (101) the secret variable s by a masking function $M$ such as $M(s) = m.s^{2p} + b$, each of the variables $m, b$ and $p$ being selected randomly from the elements of $E$ or from a subset of $E$, each of the variables $m$ and $p$ being selected non-zero;
- applying (102) to $M(s)$, according to $b$, a first substitution table $T_{pow}$ corresponding to the exponentiation function to the power $k$ and the elements of which have been calculated before for the different values that could be taken on by $M(s)$ and $b$, calculating an element of $T_{pow}$ comprising a calculation of $(M(s) - b)^k + b'$, where $b'$ is a variable determined as a function of $M(s)$ and/or $b$;
- applying (103) to the result $r_1$ obtained at the output of the first substitution table $T_{pow}$, as a function of m and $p$, a second substitution table $T_{aff}$ corresponding to the affine function $Aff$ and the elements of which have been calculated before for the different values that could be taken on by $r_1$, m and $p$, calculating an element of $T_{aff}$

comprising a calculation of $m.Aff\left((m^{-k}.r_1)^{2^{-p}}\right)^{2^p}$.

4. Method (100) according to claim 3, comprising:

- applying (104) to the variables $m, p$ and $b$' a third substitution table $T_{cor}$ the elements of which have been calculated before for the different values that could be taken on by $m, p$ and $b$', the calculation of an element of $T_{cor}$

comprising a calculation of $m.lin\left(m^{-k.2^{-p}}.b'^{2^{-p}}\right)^{2^p} - b''$, where b'' is a variable determined according to one or more element(s) among $m, b$' and $p$;
- subtracting (105) from the result $r_2$ obtained at the output of the second substitution table $T_{aff}$ the result $r_3$ obtained at the output of the third substitution table $T_{cor}$ to obtain a result $r_4$ in the form $r_4 = r_2 - r_3 = m.Sub(s)^{2p} + b''$.

5. Method (100) according to any one of claims 1 to 4, wherein the variable $b$ is selected from a strict subset $E_b$ of $E$, each of the values that could be taken on by the variable $b$ is associated with an index, and the application (102) of the first substitution table $T_{pow}$ is performed according to the index associated with the variable $b$.

6. Method (100) according to any one of claims 1 to 5, wherein the variable $m$ is selected from a strict subset $E_m$ of $E$, each of the values that could be taken on by the variable $m$ is associated with an index, and the application (103) of the second substitution table $T_{aff}$ is performed according to the index associated with the variable $m$.

7. Method (100) according to a combination of claims 5 and 6, wherein the subset $E_m$ and the subset $E_b$ are different and selected so as to obtain a constant Hamming weight for all of the values that could be taken on by a concatenation of $M(s)$ with the index corresponding to $m$ or $b$.

8. Method (100) according to any one of claims 4 to 7 in combination with claim 3, wherein the variable $p$ is selected from a smaller set $E_p$ of natural integers, or from a strict subset of the set $E_p$, the set $E_p$ being defined such that, for any natural integer $k'$ not belonging to $E_p$, there is a value $k$ belonging to $E_p$ such that, for any variable $x$ belonging to $E$, $x^{2k'}$ equals $x^{2k}$.

9. Method (100) according to claim 8, wherein each of the values that could be taken on by the variable $p$ is associated with an index, and the application (103) of the second substitution table $T_{aff}$ is performed according to the index associated with the variable $p$.

10. Method (100) according to any one of claims 1 to 9, wherein the cryptographic algorithm is the "Advanced Encryption Standard" algorithm, also known by the acronym AES, and where $E=GF(2^8)$.

11. Computer program product for executing a cryptographic algorithm, said program comprising code instructions (13) which, when executed by a processor (11) of an electronic device (10), configure said processor (11) to execute a method (100) according to any one of claims 1 to 10.

12. Electronic device (10) comprising a processor (11) and a memory (13) storing a computer program product according to claim 11, said processor (11) being configured to execute said computer program.

[Fig. 1]

10

11

13

12

[Fig. 2]

s → ( Sub ) → Sub(s)

[Fig. 3]

101

$$\text{rand} \rightarrow m$$

$$\text{rand} \rightarrow b$$

s

$$M(s) = m.s + b$$

Sub'

$$\text{Sub'}(M(s)) = m.\text{Sub}(s) + b'' = M(\text{Sub}(s)) + b'' - b$$

[Fig. 4]

$$\text{Sub}(x) = \text{Aff}(x^k) = \text{Lin}(x^k) + c$$

$s$

rand $\rightarrow$ $m$ $\rightarrow$ $\boxed{M}$ $\rightarrow$ $M(s) = m.s + b$     101

rand $\rightarrow$ $b$

$$T_{pow}(x, y) = (x - y)^k + b'$$     102

$M(s)$

$\rightarrow$ $\boxed{T_{pow}}$ $\rightarrow$ $r_1 = T_{pow}(M(s), b) = m^k . s^k + b'$

$b$

$$T_{aff}(x, y) = y.\text{Aff}(x.y^{-k})$$     103

$r_1$

$\rightarrow$ $\boxed{T_{aff}}$ $\rightarrow$ $r_2 = T_{aff}(r_1, m) = m.\text{Sub}(s) + m.\text{Lin}(m^{-k}.b')$

$m$

$$T_{cor}(x, y) = y.\text{Lin}(y^{-k}.x) - b''$$     104

$b'$

$\rightarrow$ $\boxed{T_{cor}}$ $\rightarrow$ $r_3 = T_{cor}(b', m) = m.\text{Lin}(m^{-k}.b') - b''$

$m$

    105

$r_2$

$\rightarrow$ $\boxed{\text{Diff}}$ $\rightarrow$ $r_4 = r_2 - r_3 = m.\text{Sub}(s) + b''$

$r_3$

[Fig. 5]

100

| |
|---|
| Masquage de la variable secrète en utilisant un masquage affine éventuellement combiné à un masquage carré — 101 |

| |
|---|
| Application d'une première table de substitution $T_{pow}$ au résultat obtenu en sortie du masquage — 102 |

| |
|---|
| Application d'une deuxième table de substitution $T_{aff}$ au résultat obtenu en sortie de $T_{pcw}$ — 103 |

| |
|---|
| Application d'une troisième table de substitution $T_{cor}$ — 104 |

| |
|---|
| Soustraction au résultat obtenu en sortie de $T_{aff}$ du résultat obtenu en sortie de $T_{cor}$ — 105 |

[Fig. 6]

101

rand → m

rand → b

rand → p

s

M → $M(s) = m.s^{2^{\wedge}p} + b$ → Sub'

$Sub'(M(s)) = m.Sub(s)^{2^{\wedge}p} + b'' = M(Sub(s)) + b'' - b$

[Fig. 7]

$$Sub(x) = Aff(x^k) = Lin(x^k) + c$$

$$M(s) = m.s^{2^p} + b \qquad 101$$

$$T_{pow}(x, y) = (x - y)^k + b'$$

$$r_1 = T_{pow}(M(s), b) = m^k . s^{k.2^p} + b' \qquad 102$$

$$T_{aff}(x, y, z) = y.Aff((x.y^{-k})^{2^{(-p)}})^{2^p}$$

$$r_2 = T_{aff}(r_1, m, p) = m.Sub(s)^{2^p} + m.Lin(m^{-k.2^{(-p)}}.b'^{2^{(-p)}})^{2^p} \qquad 103$$

$$T_{cor}(x, y, z) = y.Lin(y^{-k.2^{(-p)}}.x^{2^{(-p)}})^{2^p} - b''$$

$$r_3 = T_{cor}(b', m, p) = m.Lin(m^{-k.2^{(-p)}}.b'^{2^{(-p)}})^{2^p} - b'' \qquad 104$$

$$r_4 = r_2 - r_3 = m.Sub(s)^{2^p} + b'' \qquad 105$$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2296307 B1

- FR 2203809

**Littérature non-brevet citée dans la description**

- **G. FUMAROLI**. *Affine Masking against Higher-Order Side Channel Analysis*
- **M. NASSAR**. *Formal Analysis of the Entropy / Security Trade-Off in First-Order Masking Countermeasures against Side-Channel Attacks*

- **L. GENELLE**. *Secure Multiplicative Masking of Power Functions*